Europäisches Patentamt

European Patent Office

Office européen des brevets

(19)

(11) Veröffentlichungsnummer: **0 477 538 A2**

# EUROPÄISCHE PATENTANMELDUNG

(12)

(21) Anmeldenummer: **91114146.3**

(22) Anmeldetag: **23.08.91**

(51) Int. Cl.5: **B01J 20/20**, B01D 15/00

(30) Priorität: **14.09.90 DE 4029209**

(43) Veröffentlichungstag der Anmeldung:
**01.04.92 Patentblatt 92/14**

(84) Benannte Vertragsstaaten:
**AT BE CH DE DK ES FR GB GR IT LI LU NL SE**

(71) Anmelder: **DEKON GESELLSCHAFT FÜR DIE DEKONTAMINIERUNG UND AUFBEREITUNG UMWELTBELASTENDER STOFFE MBH**
Daniel-Goldbach-Strasse 25
**W-4030 Ratingen 1(DE)**

(72) Erfinder: **Herwig, Michel-Kim**
**Nussbaumweg 10**
**W-5810 Witten(DE)**

(74) Vertreter: **Becker, Thomas, Dr., Dipl.-Ing. et al**
**Eisenhüttenstrasse 2**
**W-4030 Ratingen 1(DE)**

(54) **Adsorptionsmittel, Verfahren und Vorrichtung zur Reduzierung bzw. Elimination von Schadstoffen aus flüssigen Medien.**

(57) Die Erfindung betrifft ein Adsorptionsmittel für Schadstoffe, insbesondere in flüssigen Medien, auf der Basis von Aktivkohle.

Die Erfindung betrifft ein Adsorptionsmittel sowie ein Verfahren und eine Vorrichtung zur Reduzierung beziehungsweise Elimination von Schadstoffen aus flüssigen Medien,

In den unterschiedlichsten Bereichen der Industrie, Landwirtschaft oder dergleichen fallen schadstoffbelastete Medien, insbesondere Flüssigkeiten an. Beispielhaft seien industrielle oder kommunale Abwässer, Sickerwässer aus Deponien, Flotationsrückstände im Bergbau, ölhaltige Schlämme, Klärschlämme oder dergleichen genannt, die neben organischen Bestandteilen zum Beispiel diverse Salze oder Schwermetalle enthalten.

Im Zeitalter zunehmenden Umweltbewußtseins hat es nicht an Versuchen gefehlt, geeignete Entsorgungs-Verfahren beziehungsweise Adsorptionsmittel für die Schadstoffe zu entwickeln.

Aus Chem.-Ing.-Tech. 56 (1984) Nr. 1, 55, ist die Verfestigung von Sonderabfällen mit diversen Bindern wie Zement, Wasserglas, Puzzolan, Kalk oder Gips bekannt. Der Autor weist darauf hin, daß in keinem Fall derartige Verfestigungs- und Stabilisierungs-Technologien die Aufgabe oder auch nur die Fähigkeit haben, gefährliche Inhaltstoffe aus den zu behandelnden Böden oder Abfällen zu entfernen. Die Verfestigung wird vielmehr als physikalischer Einschluß der Schadstoffkomponenten in eine feste und wenig wasserdurchlässige Masse beschrieben.

Aus der DE-A-35 06 550 ist die Einbindung umweltgefährdender Stoffe bekannt, wobei zunächst Kraftwerksasche und Wasser zu einem Brei gemischt und anschließend mit dem zu entsorgenden Stoff zusammengeführt und weiter durchmischt werden. Das erhärtete Produkt weist unbefriedigende Auslaugeigenschaften auf.

Die Verwendung von Aktivkohle als Adsorbens zur Entfernung diverser Schadstoffe ist ebenfalls bekannt. Die Aktivkohle wird dabei beispielsweise zu einer Festbettschüttung konfektioniert und das zu entsorgende Abwasser hindurchgeleitet. Ein wesentlicher Nachteil derartiger Festbettschüttungen aus Aktivkohle besteht darin, daß sie zu Kanalbildungen neigen, wobei das zu behandelnde Abwasser dann ungereinigt durch die Kanäle strömt. Man ist deshalb vielfach dazu übergegangen, die feinkörnige Aktivkohle in das zu reinigende Medium einzustreuen.

Es hat sich weiter gezeigt, daß die Beladungsgrenze bei Festbettschüttungen aus feinteiliger Aktivkohle tatsächlich nicht so hoch ist, wie sie theoretisch zu berechnen ist. Die zu entsorgenden Inhaltstoffe des Wassers brechen danach also sehr viel früher durch als erwartet.

Der Erfindung liegt insoweit die Aufgabe zugrunde, eine Möglichkeit aufzuzeigen, wie schadstoffbelastete Medien, insbesondere flüssige Medien, sicher und einfach gereinigt werden können.

Im Zusammenhang mit der Lösung dieser Aufgabe hat die Erfindung erkannt, daß auf die Aktivkohle und damit auf die mit ihr verbundenen positiven Eigenschaften, nicht verzichtet werden muß; sich gleichzeitig aber die beschriebenen Nachteile vermeiden lassen, wenn die Aktivkohle in Mischung mit einem zumindest teilweise hydratisierten anorganischen Bindemittel und einer Ton- oder Tonmineralkomponente eingesetzt wird.

Die Erfindung betrifft in ihrer allgemeinsten Ausführungsform ein Adsorptionsmittel der gattungsgemäßen Art, das aus einer wässrigen Aufschlämmung einer Feststoffmischung besteht, die

- 20 bis 80 Gewichtsteile eines zumindest teilweise hydratisierten anorganischen Bindemittels,
- 80 bis 20 Gewichtsteile eines oder mehrerer Tone und/oder Tonminerale, sowie
- 50 bis 500 Gewichtsteile Aktivkohle

enthält, wobei sich das anorganische Bindemittel und die Tone/Tonminerale zu jeweils 100 Gewichtsteilen ergänzen sollen.

Das erfindungsgemäße Adsorptionsmittel enthält also pro Gewichtsteil anorganisches Bindemittel/Tone/Tonminerale 0,5 bis 5 Gewichtsteile an Aktivkohle.

Überraschend hat sich herausgestellt, daß ein solches Adsorptionsmittel nicht nur hervorragende Adsorptionseigenschaften aufweist, sondern vor allen Dingen auch als Festbettschüttung gegenüber reiner Aktivkohle deutliche Vorteile besitzt. Versuche haben belegt, daß es unter Verwendung des genannten Adsorptionsmittels weder zu einem Zusetzen noch zu der oben beschriebenen Kanalbildung kommt. Im Gegenteil: es wird eine gleichmäßige Durchströmung des zu reinigenden Mediums durch das Adsorptionsmittel beobachtet, und zwar auch im Randbereich der Festbettschüttung.

Es wird vermutet, daß sich die hydrophilen mineralischen Komponenten und die hydrophobe Eigenschaften besitzenden Aktivkohleteilchen in synergistischer Weise ergänzen, wobei diese Oberflächenphänomene noch nicht vollständig geklärt sind. Daraus folgt, daß die Aktivkohle, die die Verwendung von Aktivkoks einschließt, gegebenenfalls auch zumindest teilweise durch andere hydrophobe und in gleicher Weise wirkende Substanzen (z B. Zeolithe) ersetzt werden kann. Ein weiterer Vorteil ist, daß die wässrige Phase des Adsorptionsmittels beim Hindurchleiten des zu reinigenden Mediums nach und nach verdrängt wird, so daß sich am austrittseitigen Ende eine Art Fiterkuchen bildet und zum Schluß nur noch ein Filterkuchen mit relativ wenig Restwasser, vorwiegend aus dem zu reinigenden Fluid, entsorgt werden muß.

Die Adsorptionswirkung des Mittels ist so hoch, daß pro Gewichtsteil der Feststoffmischung zum Beispiel mindestens 1,5 Gewichtsteile Öl adsorbiert werden können.

Diese Vorteile werden besonders deutlich im Vergleich mit einem Adsorptionsmittel, das ausschließlich aus Aktivkohle besteht, das pro Gewichtsteil nur etwa 0,2 bis 0,3 Gewichtsteile Öl aufnehmen kann.

Um die beschriebenen Vorteile zu optimieren wird vorgeschlagen, die einzelnen Komponenten der Feststoffmischung homogen zu verteilen und das Adsorptionsmittel in Form einer Suspension mit einem Wasseranteil von mindestens einem Gewichtsteil je Gewichtsteil Feststoffmischung, bereitzustellen. Der Wasseranteil kann aber auch ein Vielfaches des Feststoffanteils ausmachen.

Als anorganisches Bindemittel schlägt die Erfindung in einer vorteilhaften Ausführungsform den Einsatz von Zement, beispielsweise Portlandzement oder Hochofenzement, vor. Die erfindungsgemäß erhöhte Adsorptionswirkung des Mittels beruht offensichtlich unter anderem darauf, daß der zumindest teilweise hydratisierte Zement eine positive Oberflächenladung aufweist, während die Ton- und/oder Tonmineralteilchen negative Oberflächenladungen besitzen. Wenngleich der Wirkungsmechanismus des Adsorptionsmittels noch nicht vollständig geklärt ist, so lassen die bisherigen Versuche jedoch vermuten, daß die Zeta-Potentiale der Ton- beziehungsweise Tonmineralteilchen durch das zumindest teilweise hydratisierte Bindemittel verstärkt und in ihren Potentialen ergänzt werden.

Bevorzugte Tone und/oder Tonminerale stammen aus der Gruppe der Bentonite. An erster Stelle ist hier Montmorillonit zu nennen. Aber auch illitische, serizitische oder smektitische Tone/Tonminerale können erfindungsgemäß Anwendung finden.

Während das anorganische Bindemittel vorzugsweise in einer Ausgangs-Kornfraktion kleiner 200 $\mu$m eingesetzt wird, können die Tone/Tonminerale noch sehr viel feinteiliger sein und enthalten bevorzugt eine ursprüngliche Korngröße kleiner 10 $\mu$m.

Die Erfindung betrifft darüber hinaus ein Verfahren zur Reduzierung beziehungsweise Elimination von Schadstoffen aus flüssigen Medien unter Verwendung eines Adsorptionsmittels der vorstehend genannten Art, wobei das zu reinigende Medium durch das zumindest geringfügig verdichtete Adsorptionsmittel, bei dem die Feststoffkomponenten weitestgehend homogen verteilt sind, hindurchgeführt wird.

Die Konfektionierung des Adsorptionsmittels kann auf unterschiedliche Art und Weise erfolgen. Im einfachsten Fall wird das Adsorptionsmittel in eine Säule gefüllt und dort zumindest geringfügig verdichtet. Ausgehend von den eingangs genannten Mischungsbestandteilen, zum Beispiel einem Gewichtsteil Aktivkohle, einem Gewichtsteil Bindemittel/Ton/Tonmineral-Gemisch und 6 Gewichtsteilen Wasser ergibt sich ein viskoses Adsorptionsmittel, das am Ein- und Ausgang der Säule zum Beispiel über entsprechende Filtertücher abgedichtet wird. Die zu reinigenden Medien, zum Beispiel die eingangs genannten Abwässer oder Schlämme, werden dann durch die Säule und damit durch das Adsorptionsmittel von einem Ende zum anderen hindurchgeleitet, wobei die Schadstoffe, beispielsweise Kohlenwasserstoffe, Schwermetalle oder dergleichen, von dem beschriebenen Adsorptionsmittel adsorbiert werden, so daß am ausgangsseitigen Ende der Säule eine mehr oder weniger gereinigte Flüssigkeit abgezogen werden kann.

"Mehr oder weniger" bedeutet, daß je nach Anteil der einzelnen Mischungskomponenten, Auswahl des Bindemittels, der Tone oder Tonminerale, der Aktivkohle sowie der Durchströmzeit unterschiedliche Adsorptionsgrade erzielt werden können.

Besonders hervorzuheben ist, daß bei dieser Verfahrensführung Durchbrüche im Adsorptionsmittel (Kanalbildung) beziehungsweise ein Zusetzen der Säule vollständig verhindert werden kann. Die Durchströmungszeit für das zu reinigende Medium kann zwischen 30 Minuten und mehreren Stunden betragen. Das Verfahren kann voll kontinuierlich arbeiten. Ist die Adsorptionsfähigkeit des Adsorptionsmittels erschöpft, läuft das zu reinigende Medium frei durch, was zum Beispiel optisch sofort erfaßbar ist. Um eine weitere kontinuierliche Reinigung zu ermöglichen, kann das Verfahren so gestaltet werden, daß mehrere Reinigungsvorrichtungen kaskadenförmig angeordnet und die eine Vorrichtung bei Erreichen der Kapazitätsgrenze des Adsorptionsmittels abgeschaltet und die nächste Vorrichtung zugeschaltet wird.

Aufgrund der beschriebenen Verdrängung des Wassers aus dem Adsorptionsmittel enthält dieses am Ende, je nach Druckverhältnissen, zum Teil weniger als 30 Gew.-% Wasser, so daß der Stoff anschließend unmittelbar einer weiteren Entsorgung, zum Beispiel Verbrennung, zugänglich gemacht werden kann und dabei noch einen guten Heizwert besitzt.

Die vorstehend beschriebene Vorrichtung weist in jedem Fall eine Zuführeinrichtung für das verunreinigte, flüssige Medium und eine Abführeinrichtung für das gereinigte flüssige Medium auf sowie eine, im strömungstechnischen Sinne dazwischengeschaltete Kammer, die mit dem Adsorptionsmittel gefüllt ist.

In einer besonders vorteilhaften Ausführungsform ist die Vorrichtung in Form einer Hohlkugel gestaltet, wobei die Zuführeinrichtung von außen durch die Wand der Hohlkugel in das Kugelinnere führt, die Wand doppelwandig und von innen nach außen durchströmbar ausgeführt sowie mit dem genannten Adsorptionsmittel gefüllt ist, und die Abführeinrichtung für das gereinigte flüssige Medium vom äußeren Wandabschnitt aus verläuft.

In gleichem Maße wie vorstehend beschrieben wird dabei zumindest an der Innenseite des äußeren Wandabschnitts zum Beispiel ein Filtertuch angeordnet, um ein unbeabsichtigtes Ausströmen des Adsorptionsmittels zu verhindern.

Diese Ausführungsform der Vorrichtung weist den Vorteil auf, daß das zu reinigende Medium in allen Richtungen unter gleichem Druck durch das Adsorptionsmittel geleitet werden kann, womit die Adsorptionswirkung insgesamt ebenfalls vergleichmäßigt wird. Außerdem läßt sich auf diese Weise eine besonders hohe Durchströmungsfläche für das Medium bereitstellen. Gleichzeitig werden die oben beschriebenen verfahrenstechnischen Probleme (ungleichmäßige Durchströmung) ausgeschaltet, weil praktisch keine Randbereiche zwischen der Wand der Vorrichtung und dem Adsorptionsmittel (in Strömungsrichtung) mehr bestehen.

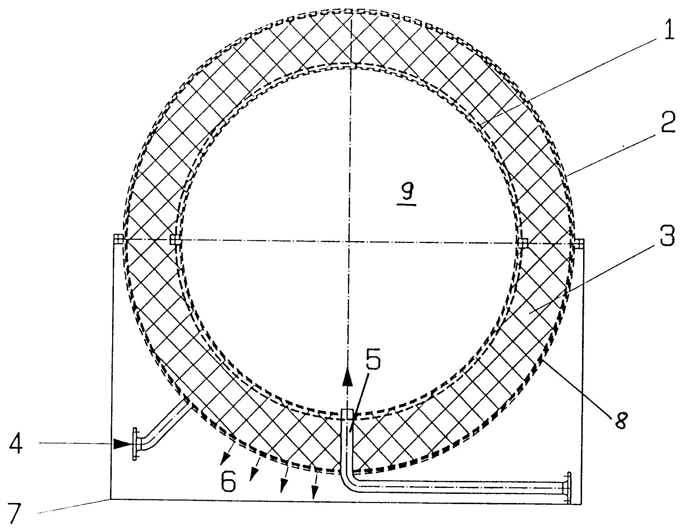

Die Erfindung wird nachstehend anhand eines Ausführungsbeispieles näher erläutert, wobei die einzige Figur
einen Längsschnitt durch eine erfindungsgemäße Vorrichtung in Form einer Hohlkugel
in schematischer Darstellung zeigt.

Die Hohlkugel besteht aus einem inneren, flüssigkeitsdurchlässigen Wandabschnitt 1 und einem dazu im Abstand angeordneten, ebenfalls flüssigkeitsdurchlässigen äußeren Wandabschnitt 2, die über entspechende Abstandhalter (nicht dargestellt) gegeneinander positioniert sind.

Auf der Innenseite des äußeren Wandschnitts 2 ist ein Filtertuch 8 angeordnet.

In den Raum 3 zwischen innerem Wandschnitt 1 und äußerem Wandabschnitt 2 wird über eine Zuführleitung 4 ein Adsorptionsmittel aus

- 50 Gewichtsteilen Zement
- 50 Gewichtsteilen Ton
- 100 Gewichtsteilen Aktivkohle
- 500 Gewichtsteilen Wasser

unter Druck eingefüllt, wobei das Adsorptionsmittel eine hochviskose Form aufweist. Nach Füllung des Raumes 3 und Verdichtung des Adsorptionsmittels wird die Zuführleitung 4 geschlossen und danach über eine Zuführleitung 5, die gegen die Wand der Hohlkugel abgedichtet in deren Innenraum 9 verläuft, unter Druck das zu reinigende Abwasser in den inneren Hohlraum 9 kontinuierlich eingespeist.

Das Abwasser, das zum Beispiel Kohlenwasserstoffe oder Schwermetalle als Schadstoffe enthält, wird dann durch den inneren Wandabschnitt 1, das Adsorptionsmittel, das Filtertuch 8 und den äußeren Wandabschnitt 2 gedrückt, bevor es - gereinigt - auf der Oberfläche des äußeren Wandschnitts 2 abläuft und in einem Sammelbehälter 7 aufgefangen und weggeführt wird. Mit dem Bezugszeichen 6 ist die Austrittsrichtung des gereinigten Abwassers dargestellt.

Das Adsorptionsmittel zwischen den Wandabschnitten 1, 2 nimmt nach und nach die Schadstoffe des hindurchgeführten Abwassers auf, bis zur Sättigungsgrenze. Die Zufuhr weiteren verunreinigten Abwassers wird dann abgeschaltet und in eine weitere, baugleiche Vorrichtung zugeführt, während die erste Vorrichtung gereinigt wird, das heißt, das Adsorptionsmittel ausgetauscht wird.

Auf diese Weise läßt sich eine kontinuierliche Reinigung erreichen. Anstelle der dargestellten Verfahrensführung, bei der das zu reinigende Abwasser von innen nach außen das Adsorptionsmittel durchströmt, kann auch eine umgekehrte Verfahrensweise angewendet werden. In diesem Fall wird das Abwasser von außen nach innen geführt und über die Zuführleitung 5, die jetzt als Abführleitung dient, aus dem System abgezogen.

Durch die Kammerung des Adsorptionsmittels wird das Haft- und Kapillarwasser in der Adsorbenspackung durch Wasserinhaltstoffe (zum Beispiel Ölemulsionen) verdrängt, und hierbei wird der Wassergehalt des Adsorptionsmittels wesentlich gesenkt, so daß der Adsorptionsprozeß zugleich ein Entwässerungsprozeß ist, und das später zu entsorgende Adsorptionsmittel nur einen geringen Wassergehalt (meist kleiner 30 Gew.-%) aufweist.

**Patentansprüche**

1. Adsorptionsmittel für Schadstoffe, insbesondere in flüssigen Medien, bestehend aus einer wässrigen Aufschlämmung einer Feststoffmischung, die

   1.1 20 bis 80 Gewichtsteile eines zumindest teilweise hydratisierten anorganischen Bindemittels,

   1.2 80 bis 20 Gewichtsteile eines oder mehrerer Tone und/oder Tonminerale,

   1.3 50 bis 500 Gewichtsteile Aktivkohle

   enthält, wobei die Summe des zumindest teilweise hydratisierten anorganischen Bindemittels sowie der Tone und/oder Tonminerale sich auf jeweils 100 Gewichtsteile ergänzt.

2. Adsorptionsmittel nach Anspruch 1, bei dem der Wassergehalt mindestens das Doppelte der Menge der Feststoffmischung beträgt.

3. Adsorptionsmittel nach Anspruch 1 oder 2, bei dem das anorganische Bindemittel ein Zement ist.

4. Adsorptionsmittel nach einem der Ansprüche 1 bis 3, bei dem die Tone und/oder Tonminerale Bentonit enthalten.

**5.** Adsorptionsmittel nach einem der Ansprüche 1 bis 4, bei dem jeweils 40 bis 60 Gewichtsteile des zumindest teilweise hydratisierten anorganischen Bindemittels mit 60 bis 40 Gewichtsteilen eines oder mehrerer Tone und/oder Tonminerale in Mischung eingesetzt werden.

**6.** Adsorptionsmittel nach einem der Ansprüche 1 bis 5, bei dem das anorganische Bindemittel vollständig hydratisiert ist.

**7.** Adsorptionsmittel nach einem der Ansprüche 1 bis 6, dessen Aktivkohle-Komponente eine spezifische Oberfläche von mehr als 100 m$^2$/g aufweist.

**8.** Adsorptionsmittel nach einem der Ansprüche 1 bis 7, dessen Aktivkohle-Komponente zumindest teilweise durch eine andere hydrophobe und in gleicher Weise wirkende Substanz ersetzt ist.

**9.** Verfahren zur Reduzierung beziehungsweise Elimination von Schadstoffen aus flüssigen Medien unter Verwendung eines Adsorptionsmittels nach einem der Ansprüche 1 bis 8, wobei das zu reinigende Medium durch das zumindest geringfügig verdichtete Adsorptionsmittel, bei dem die Feststoffkomponenten weitestgehend homogen verteilt sind, hindurchgeführt wird.

**10.** Vorrichtung zur Reduzierung beziehungsweise Elimination von Schadstoffen aus flüssigen Medien, mit einer Zuführeinrichtung (5) für das verunreinigte flüssige Medium und einer Abführeinrichtung (2, 6, 7) für das gereinigte flüssige Medium sowie einer, im strömungstechnischen Sinne dazwischengeschalteten Kammer (1, 2), die mit einem Adsorptionsmittel nach einem der Ansprüche 1 bis 8 gefüllt ist.

**11.** Vorrichtung nach Anspruch 10, bei der das Adsorptionsmittel in der Kammer (1, 2) zumindest geringfügig verdichtet ist.

**12.** Vorrichtung nach einem der Ansprüche 10 oder 11, bei der die Kammer (1, 2) beziehungsweise Kammerfüllung so ausgeführt beziehungsweise das zu reinigende Medium unter einem solchen Druck zugeführt wird, daß es innerhalb der Kammer (1, 2) eine Verweilzeit von mindestens 30 Minuten erfährt.

**13.** Vorrichtung nach einem der Ansprüche 10 bis 12 in Form einer Hohlkugel, wobei die Zuführeinrichtung (5) für das verunreinigte flüssige Medium von außen durch die Wand (1, 2) der Hohlkugel in das Kugelinnere (9) führt, die Wand (1, 2) doppelwandig und von innen nach außen durchströmbar ausgeführt sowie mit einem Adsorptionsmittel nach einem der Ansprüche 1 bis 6 gefüllt ist und die Abführeinrichtung (2) für das gereinigte flüssige Medium vom äußeren Wandabschnitt (2) aus verläuft.

**14.** Vorrichtung nach Anspruch 13, bei der die inneren und äußeren Wandabschnitte (1, 2) perforiert ausgebildet sind und auf der Innenfläche des äußeren Wandabschnitts (2) ein Filtertuch (8) angeordnet ist.